(19) Europäisches Patentamt
European Patent Office
Office européen des brevets

(11) **EP 2 786 174 B1**

(12) **EUROPÄISCHE PATENTSCHRIFT**

(45) Veröffentlichungstag und Bekanntmachung des Hinweises auf die Patenterteilung:
**02.01.2019 Patentblatt 2019/01**

(51) Int Cl.:
***G01S 17/42*** *(2006.01)*     ***G01S 17/89*** *(2006.01)*
***G01C 15/00*** *(2006.01)*

(21) Anmeldenummer: **12791788.8**

(22) Anmeldetag: **29.11.2012**

(86) Internationale Anmeldenummer:
**PCT/EP2012/073999**

(87) Internationale Veröffentlichungsnummer:
**WO 2013/079615 (06.06.2013 Gazette 2013/23)**

(54) **VERFAHREN ZUM VERMESSEN VON RAUMPUNKTEN**

METHOD FOR OPERATING A LASER SCANNER

PROCÉDÉ DESTINÉ AU FONCTIONNEMENT D'UN SCANNER LASER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.11.2011 EP 11191195**

(43) Veröffentlichungstag der Anmeldung:
**08.10.2014 Patentblatt 2014/41**

(73) Patentinhaber: **Hexagon Technology Center GmbH**
**9435 Heerbrugg (CH)**

(72) Erfinder:
• **STUTZ, Reto**
**9442 Berneck (CH)**
• **ROHNER, Marcel**
**9410 Heiden (CH)**
• **BEDNAREK, Ingo**
**D-73734 Esslingen am Neckar (DE)**

(74) Vertreter: **Kaminski Harmann Patentanwälte AG**
**Landstrasse 124**
**9490 Vaduz (LI)**

(56) Entgegenhaltungen:
**DE-A1-102010 020 925     US-A- 5 644 386**
**US-A1- 2009 190 007**

• **SERBAN OPRISESCU ET AL: "Measurements with ToF Cameras and Their Necessary Corrections", SIGNALS, CIRCUITS AND SYSTEMS, 2007. ISSCS 2007. INTERNATIONAL SYMPOSI UM ON, IEEE, PI, 1. Juli 2007 (2007-07-01), Seiten 1-4, XP031128576, ISBN: 978-1-4244-0968-6**

**Beschreibung**

Die Erfindung betrifft ein Verfahren zum Vermessen von Raumpunkten mittels eines Laserscanners.

DE 10150436 A1 beschreibt einen Laserscanner zum berührungslosen Abtasten (Scannen) eines beliebigen entfernten Objekts in drei Dimensionen (3D). Von einer Laserquelle erzeugtes Licht wird über einen Spiegel auf das abzutastende Objekt gerichtet, und vom abgetasteten Objekt reflektiertes Licht wird über den Spiegel umgelenkt und von einem Detektor erfasst. Durch Verstellen des Spiegels scannt Licht in zeitlicher Abfolge über eine Vielzahl verschiedener Punkte des Objekts. Das abzutastende Objekt im Sinne der Erfindung kann auch eine aus mehreren physikalischen Objekten bestehende Szenerie sein, wie etwa mehrere Bäume, Personen, Häuser usw.

Die Funktionsweise des Laserscanners basiert somit auf der Wechselwirkung von Licht mit Punkten des abzutastenden Objekts. Im Sinne der Erfindung wird dieser physikalische Vorgang als Streuung bzw. Reflexion von Licht an Raumpunkten des Objekts verallgemeinert. Die Spiegelstellungen des Laserscanners zu den Raumpunkten des Objekts werden als Elevations- oder Polarwinkel $\theta$ und Horizontal- oder Azimutwinkel $\varphi$ über Winkelsensoren ermittelt. Die Winkel $\theta$, $\varphi$ bilden einen Winkelraum. Die Spiegel werden schrittweise oder kontinuierlich gedreht. Die Laserquelle, der Detektor und die Winkelsensoren geben Zustandssignale an eine Steuereinheit aus. Die Zustandssignale geben den Zustand des Laserscanners zum Zeitpunkt des Abtastens eines Raumpunktes an. Die Steuereinheit misst für jeden abgetasteten Raumpunkt entweder Pulslaufzeiten des erzeugten und erfassten Lichts oder sie misst eine Phasenverschiebung zwischen dem erzeugten Licht und dem erfassten Licht. Die Steuereinheit ermittelt aus solchen Messdaten eine Distanz r vom Laserscanner zum abgetasteten Raumpunkt. Das Betreiben des Laserscanners wird in zeitlicher Abfolge zum Ermitteln einer Vielzahl von Distanzen r und Winkel $\theta$, $\varphi$ wiederholt. Zu jedem Raumpunkt wird ein Entfernungsvektor mit der Distanz r und den Winkeln $\theta$, $\varphi$ als Koordinaten ermittelt.

Ein solcher Laserscanner wird von der Anmelderin unter dem Namen Scanstation C10 kommerziell vertrieben. Dieser Laserscanner misst Pulslaufzeiten und realisiert Einzelmessungen von Raumpunkten. Der Laserscanner weist ein Sichtfeld von 360°×270° auf; über eine Entfernung von 0.1m bis 300m ermittelt er bis zu $0.5 \times 10^{6}$ Entfernungsvektoren pro Sekunde; im Entfernungsbereich von 1m bis 50m wird die Koordinatenposition des Objekts mit einer Messgenauigkeit von 6mm und die Distanz r des Objekts mit einer Messgenauigkeit von 4mm ermittelt.

Die Messgenauigkeit wird von verschiedenen Arten von schwer zu quantifizierendem Rauschen der ausgegebenen Zustandssignale begrenzt. Beispielsweise entsteht Rauschen durch thermisches Rauschen des Detektors, durch Quantisierungsrauschen der Photonen im Detektor, durch lokale Spitzen in der im Detektor verwendeten Avalanche Photodiode oder Pin Diode. Auch entsteht Rauschen durch Photonen des Hintergrundlichts. Bei kurzen Entfernungen beeinträchtigt Schrotrauschen die Messgenauigkeit, welches Schrotrauschen durch Fluktuationen der ankommenden Signalphotonen erzeugt wird.

US 5,644,386 A beschreibt ein optisches Zielerkennungssystem, wobei ein mittels LADAR aufgenommenes dreidimensionales Bild aufgeteilt wird, um das Ziel vom Hintergrund abzuheben. DE 10 2010 020925 A1 zeigt ein Verfahren zum optischen Abtasten und Vermessen einer Umgebung und zur Anzeige von Messpunkten. Dabei werden zur Anzeige solcher Pixel, die zwischen Messpunkten zugeordneten Pixeln liegen, diesen Pixeln Werte in Abhängigkeit von den Werten benachbarter Pixel zugeordnet.

Eine erste Aufgabe der Erfindung besteht darin, ein verbessertes Verfahren zum Betreiben eines Laserscanners bereitzustellen. Eine zweite Aufgabe der Erfindung besteht darin, ein Verfahren zum Betreiben eines Laserscanners bereitzustellen, das ein Objekt sehr rasch und mit sehr hoher Messgenauigkeit abtastet. Eine dritte Aufgabe der Erfindung besteht darin, einen bestehenden Laserscanner auf einfache Art und Weise aufzurüsten, um ein Objekt sehr rasch und mit sehr hoher Messgenauigkeit abzutasten.

Zumindest eine dieser Aufgaben wird durch die kennzeichnenden Merkmale der unabhängigen Ansprüche oder der abhängigen Ansprüche gelöst.

Erfindungsgemäss weist das Verfahren zum Betreiben eines Laserscanners die folgenden Schritte auf: Abtasten von mindestens drei Raumpunkten eines Objekts; Ermitteln von Koordinaten des jeweiligen Raumpunktes, wobei der Laserscanner den Koordinatenursprung bildet und die Koordinaten eine Distanz und mindestens einen Winkel umfassen; Bestimmen eines Nahbereichs um einen zentralen Raumpunkt mit mindestens zwei Raumpunkten; Aggregieren von Koordinaten der Raumpunkte im bestimmten Nahbereich; und Ersetzen von Koordinaten des zentralen Raumpunktes durch das Aggregieren von Koordinaten der Raumpunkte im bestimmten Nahbereich.

Vorteilhafterweise werden ermittelte Koordinaten des zentralen Raumpunktes durch das Aggregieren von ermittelten Koordinaten der Raumpunkte im bestimmten Nahbereich durch einen Mittelwert von ermittelten Koordinaten der Raumpunkte im bestimmten Nahbereich ersetzt. Somit lassen sich ermittelte Koordinaten durch eine Aggregation von Koordinaten, vorzugsweise durch einen Mittelwert unter Berücksichtigung von Nebenbedingungen gezielt ersetzen, was den Messfehler reduziert und damit die Oberflächengenauigkeit beim Abtasten erhöht.

Es hat sich herausgestellt, dass beim Betreiben eines Laserscanners eine Aggregation von Koordinaten von Raumpunkten in einem bestimmten Nahbereich die Oberflächengenauigkeit des abzutastenden Objekts erhöht. Erfindungsgemäss werden die vom Laserscanner ermittelten Raumpunkte bearbeitet, entweder in Echtzeit oder mit zeitlicher Verzögerung. Dazu wird ein Nahbereich von abgetasteten Raumpunkten gebildet. Einer der abgetasteten Raumpunkte des Nahbereichs wird als zentraler Raumpunkt bestimmt und mindestens zwei abgetastete Raumpunkte werden als im Winkelraum benachbart zu diesem zentralen Raumpunkt bestimmt. Koordinaten von ermittelten Raumpunkten im Nahbereich werden aggregiert, was zu einer Minimierung des Messfehlers führt.

Aggregation im Sinne der Erfindung bezeichnet ein Filtern der Koordinaten von ermittelten Raumpunkten im Nahbereich zu einem zentralen Raumpunkt; beim Filtern werden Koordinateninformationen der Raumpunkte, vorzugsweise die Koordinateninformationen aller Raumpunkte im Nahbereich berücksichtigt; und die Koordinate des zentralen Raumpunktes wird durch eine aggregierte Koordinate ersetzt. Diese Aggregation wird für weitere erfasste Raumpunkte, vorzugsweise für alle erfassten Raumpunkte wiederholt. Dazu wird ein weiterer Nahbereich zu einem weiteren zentralen Raumpunkt bestimmt, und weitere abgetastete Raumpunkte werden als im Winkelraum benachbart zu diesem weiteren zentralen Raumpunkt bestimmt. Bei der Aggregation erfolgt somit keine Datenreduktion, weder wird die Anzahl der Raumpunkte reduziert, noch wird die Anzahl der Koordinaten reduziert. Dabei wird von drei Nebenbedingungen ausgegangen:

i) die Scannschrittgrösse von einem Raumpunkt zum nächsten Raumpunkt ist weitgehend konstant,

ii) die Oberfläche des abzutastenden Objekts ist weitgehend kontinuierlich, und

iii) die Scannschrittgrösse ist in der Grössenordnung der Kontinuität der Oberfläche des abzutastenden Objekts. Eine solche Aggregation von Koordinaten erfolgt mit geringem technischem Aufwand und sehr rasch.

Erfindungsgemäss werden die Raumpunkte vom Laserscanner mit einer Scannschrittgrösse eines Winkels abgetastet, und unter Verwendung der abgetasteten Raumpunkte wird ein Nahbereich bestimmt, wobei mindestens solche abgetastete Raumpunkte als zum zentralen Raumpunkt benachbart gelten, die kleiner oder gleich zwei Scannschrittgrössen des Winkels um den zentralen Raumpunkt sind.

Vorteilhafterweise wird das Aggregieren von Koordinaten der ermittelten Entfernungsvektoren im bestimmten Nahbereich durch einen einstellbaren Filter gewichtet. Somit wird das Aggregieren der Koordinaten im Nahbereich gebildet durch einen einstellbaren Filter gewichtet, wodurch der Informationsgehalt des ermittelten Entfernungsvektors in objektiv nachvollziehbarer Weise unverfälscht erhalten bleibt. So wird die Standardabweichung des Rauschens durch den Filter verringert.

Erfindungsgemäss werden als Koordinaten eine Distanz und mindestens ein Winkel ermittelt. Die Distanz kann die direkte Entfernung vom Laserscanner zum abgetasteten Raumpunkt des Objekts sein. Die Aggregation von Koordinaten lässt sich somit für verschiedene Parameter des Verfahrens zum Betreiben eines Laserscanners gezielt durchführen, was den Messfehler reduziert und damit die Oberflächengenauigkeit beim Abtasten erhöht.

In einer ersten Ausführungsform des erfindungsgemässen Verfahrens werden als Koordinaten eine Distanz und zwei Winkel ermittelt. Es wird ein zweidimensionaler Nahbereich um den zentralen Raumpunkt bestimmt. Dieser weist mindestens zwei Raumpunkte auf, deren erste Winkelkoordinate in einem definierten Winkelraum benachbart zu derjenigen des zentralen Raumpunktes ist, und mindestens zwei Raumpunkte, deren zweite Winkelkoordinate in einem definierten Winkelraum benachbart zu derjenigen des zentralen Raumpunktes ist.

In einer zweiten Ausführungsform des erfindungsgemässen Verfahrens wird ein Nahbereich um den zentralen Raumpunkt bestimmt, der mindestens zwei Raumpunkte aufweist, deren Winkelkoordinaten in einem definierten Winkelraum benachbart zu denen des zentralen Raumpunktes sind, und deren gemessene Distanzen sich von der im zentralen Raumpunkt gemessenen Distanz um nicht mehr als einen definierten Schwellenwert unterscheiden.

Der definierte Schwellenwert erlaubt eine Anpassung des Verfahrens an Abweichungen von einer oder mehreren der Nebenbedingungen i) bis iii), d. h. an nicht konstante Scannschrittgrössen, an diskontinuierliche Oberflächen des abzutastenden Objekts, oder an Scannschrittgrössen, die nicht in der Grössenordnung der Kontinuität des abzutastenden Objekts sind. Eine solche Anpassung an die Dynamik der Oberfläche des Objekts ist erwünscht. Solche Abweichungen erfolgen an Kanten oder Vorsprüngen des Objekts. Beispielsweise werden mehrere Objekte wie ein Gebäude und ein Baum abgetastet, wobei das Gebäude im Sichtfeld des Laserscanners zumindest teilweise vom Baum verdeckt wird, der Baum steht vor dem Gebäude. Zwischen Baum und Gebäude besteht eine Diskontinuität, die der Realität entspricht und erwünscht ist. Ein Filtern dieser Diskontinuität würde den Informationsgehalt der ermittelten Entfernungsvektoren verfälschen.

Vorteilhafte Weiterbildungen der Ausführungsformen der Erfindung ergeben sich aus den Merkmalen der abhängigen Ansprüche.

Weitere Vorteile und Merkmale der Erfindung sind aus der folgenden Beschreibung von bevorzugten Ausführungsformen im Zusammenhang mit den anhängenden Figuren beispielhaft und schematisch ersichtlich.

Figur 1 zeigt eine Ansicht eines Teils einer Ausführungsform eines Laserscanners;

Figur 2 zeigt einen Schnitt durch den Laserscanner nach Figur 1;

Figur 3 zeigt ein Flussdiagramm der Schritte des Verfahrens zum Betreiben des Laserscanners nach Figur 1;

Figur 4 zeigt eine erste Ausführungsform der Aggregation von Koordinaten ermittelter Entfernungsvektoren im Verfahren nach Figur 3;

Figur 5 zeigt eine zweite Ausführungsform der Aggregation von Koordinaten ermittelter Entfernungsvektoren im Verfahren nach Figur 3;

Figur 6 zeigt eine dritte Ausführungsform der Aggregation von Koordinaten ermittelter Entfernungsvektoren im Verfahren nach Figur 3; und

Figur 7 und 8 sind andere Darstellungen in einer der Ausführungsformen nach Figur 4 bis 6 der Aggregation von Koordinaten ermittelter Entfernungsvektoren im Verfahren nach Figur 3.

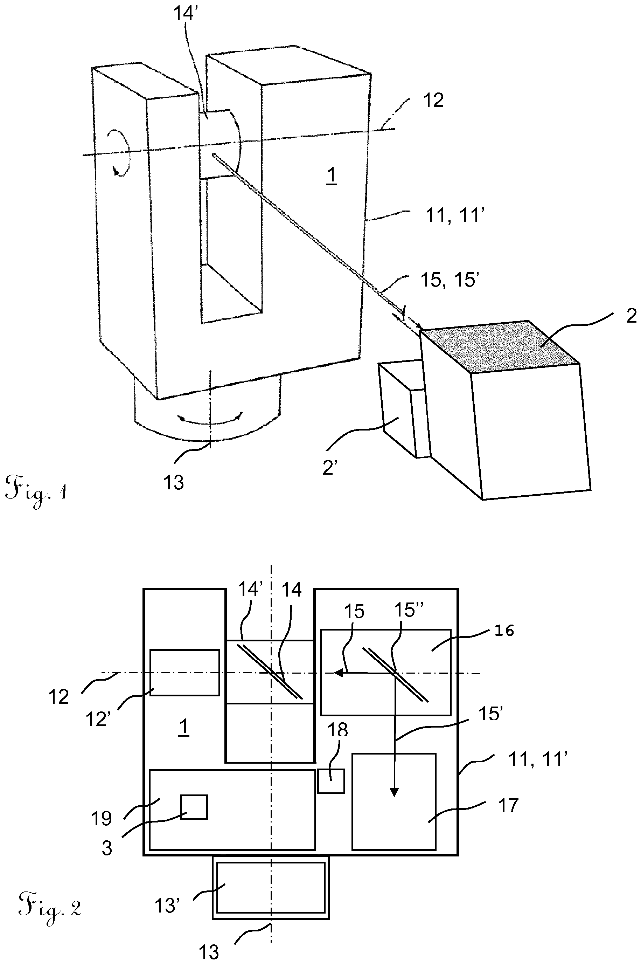

Figur 1 ist eine Prinzipdarstellung eines Laserscanners 1 zum berührungslosen Abtasten eines entfernten Objekts 2, 2' in drei Dimensionen (3D) oder in zwei Dimensionen (2D). Der Laserscanner 1 kann zur speziellen Überwachung, Erfassung, Digitalisierung, usw. von statischen oder dynamischen Objekten 2, 2' geeignet sein, der Laserscanner 1 kann aber auch ein geodätisches Multifunktionsgerät wie ein Tachymeter, eine Totalstation, usw. bei der allgemeinen Ingenieur- und Bauvermessung von Objekten 2, 2' sein. Das Objekt 2, 2' besteht schematisch aus einem ersten Würfel 2 und einem zweiten Würfel 2', wobei das Sichtfeld des Laserscanners 1 auf den ersten Würfel 2 teilweise vom zweiten Würfel 2' verdeckt wird. Prinzipiell lassen sich beliebig viele Objekte 2, 2' abtasten. Der Laserscanner 1 kann durch 360°-Schwenkungen um zwei Schwenkachsen ein Vollpanorama mit einem Sichtfeld von 360°×360° abtasten und so eine Szenerie mit mehreren Objekten vollständig abtasten.

Der Laserscanner 1 weist eine statische Basis als Unterteil und eine verschwenkte Stütze 11 auf. Die Stütze 11 umfasst einen ersten Antrieb 12' einer Kippachse oder horizontalen Schwenkachse 12 und einen zweiten Antrieb 13' für eine Stehachse oder vertikale Schwenkachse 13. Ein 2D-Laserscanner weist nur einen solchen Antrieb auf. Der erste Antrieb 12' und der zweite Antrieb 13' werden über Stellgrössen angesteuert. Ein Ablenkkopf 14' ist beispielsweise um 360° um die horizontale Schwenkachse 12 schwenkbar und um 360° um die vertikale Schwenkachse 13 schwenkbar. Während die Stütze 11 aus einem soliden Gehäuse 11' mit hoher Steifigkeit aufgebaut ist, besteht der Ablenkkopf 14' aus möglichst wenigen und leichten Bauteilen um hohe Umdrehungszahlen der horizontalen Schwenkachse 12 zu ermöglichen. Der Laserscanner 1 weist eine nicht dargestellte elektrische Stromversorgung der Bestandteile des Laserscanners 1 auf.

Figur 2 zeigt einen Schnitt durch das Gehäuse 11' der Stütze 11. Eine in der Stütze 11 angeordnete Laserquelle 16 erzeugt Licht 15, das in der horizontalen Schwenkachse 12 auf einen Spiegel 14 gerichtet wird und das durch Verschwenken der Stütze 11 über den Spiegel 14 auf das abzutastende Objekt 2 gerichtet wird. Am Objekt 2, 2' gestreutes bzw. reflektiertes Licht 15' wird über den Spiegel 14 umgelenkt und von mindestens einem in der Stütze 11 angeordneten Detektor 17 erfasst. Ein Ablenkspiegel 15" lenkt das erfasste Licht 15' aus der horizontalen Schwenkachse 12 auf den Detektor 17. Die Laserquelle 16 ist ein aktives Sensorsystem. Das Licht 15, 15' besteht aus elektromagnetischen Wellen. Der Detektor 17 ist beispielsweise eine Avalanche-Photodiode oder eine Pin-Diode. Mindestens ein Winkelsensor 18 ermittelt die Verschwenkstellungen des Spiegels 14; dies erfolgt beispielsweise durch Erfassen von durch das Verschwenken des Spiegels 14 gebildeten Relativbewegungen von optischen Marken zu einer Referenz. Der Winkelsensor 18 erfasst somit den ersten Winkel, den Horizontal- oder Azimutswinkel $\varphi$ der vertikalen Schwenkachse 13 zum abgetasteten Raumpunkt des Objekts 2, 2', und den zweiten Winkel, den Elevations- oder Polarwinkel $\theta$ der horizontalen Schwenkachse 12 zum abgetasteten Raumpunkt des Objekts 2, 2'.

Die Laserquelle 16, der Detektor 17 und der Winkelsensor 18 geben Zustandssignale an eine Steuereinheit 19 aus. Die Zustandssignale geben den Zustand des Laserscanners 1 zum Zeitpunkt des Abtastens eines Raumpunktes an. Die Steuereinheit 19 wertet die Zustandssignale aus. Dazu misst die Steuereinheit 19 für jeden abgetasteten Raumpunkt entweder Pulslaufzeiten des erzeugten Lichts 15 und des erfassten Lichts 15' oder eine Phasenverschiebung zwischen dem erzeugten Licht 15 und dem erfassten Licht 15'. Aus der gemessenen Pulslaufzeiten oder Phasenverschiebung ermittelt die Steuereinheit 19 eine Distanz r des Entfernungsvektors E für die Entfernung zwischen dem Laserscanner 1 und dem abgetasteten Raumpunkt des Objekts 2, 2'. Der ermittelte Entfernungsvektor E wird als 3D-Tripel bezogen auf ein $(r, \theta, \varphi)$-Koordinatensystem in einem computerlesbaren Datenspeicher der Steuereinheit 19 gespeichert. Der ermittelte Entfernungsvektor E weist als Koordinaten die Distanz r, den Azimutswinkel $\varphi$ und den Polarwinkel $\theta$ auf. Die Steuereinheit 19 erzeugt Stellgrössen für den ersten Antrieb 12' und den zweiten Antrieb 13' zum Verschwenken des Spiegels 14 um eine einstellbare Scannschrittgrösse. Der Spiegel 14 wird beim Messen von Pulslaufzeiten schrittweise oder beim Messen der Phasenverschiebung kontinuierlich gedreht. Die Scannschrittgrösse des

Azimutswinkels φ und die Scannschrittgrösse des Polarwinkel θ sind dementsprechend frei einstellbar. Das Betreiben des Laserscanners 1 wird in zeitlicher Abfolge für eine Vielzahl von Entfernungsvektoren E fortlaufend wiederholt. Der Fachmann kann anstatt eines spaltenweise erfolgenden Abtastens um Schwenkachsen des Laserscanners auch ein beliebig spiralförmiges Abtasten realisieren. Auch kann der Fachmann anstatt einer Laserquelle ein anderes aktives Sensorsystem wie Mikrowellensensoren oder Ultraschallsensoren verwenden. Zudem kann der Fachmann anstatt eines (r, θ, φ)-Koordinatensystems natürlich auch ein kartesisches Koordinatensystem verwenden.

Der Laserscanner 1 weist eine Auswertungseinheit 3 auf. Die Auswertungseinheit 3 kann wie in Figur 2 dargestellt, integrativer Bestandteil der Steuereinheit 19 sein; die Auswertungseinheit 3 kann aber auch eine eigenständige Einheit sein, die körperlich vom Laserscanner 1 und der Steuereinheit 19 getrennt ist, beispielsweise ein ortsfester Computer wie ein Personalcomputer (PC) oder ein mobiler Computer wie ein Laptop, Smartphone usw. Wenn die Auswerteeinheit 3 integrativer Bestandteil der Steuereinheit 19 ist, hat das verglichen mit einer körperlich vom Laserscanner 1 und der Steuereinheit 19 getrennten Auswerteeinheit 3 den Vorteil, dass die Auswertung deutlich schneller erfolgt; zudem können ermittelte Entfernungsvektoren E durch Datenspeicherung und Datentransport nachteilig verändert werden, beispielsweise an Dynamik verlieren oder verrauschen; auch kann dann die Aggregation auf die meist proprietäre Software und Hardware des Laserscanners 1 abgestimmt werden, so können beispielsweise nur solche Distanzen r aggregiert werden, von denen der Winkel zwischen dem Laserscanner 1 und dem Raumpunkt des Objekts mit definierter Genauigkeit bestimmt worden ist. Die Auswerteeinheit 3 weist einen Mikroprozessor und einen computerlesbaren Datenspeicher auf.

Zum Betreiben des Laserscanners 1 wird Programmcode, der auf einem maschinenlesbaren Träger gespeichert ist, in der Auswerteeinheit 3 ausgeführt. Vom Laserscanner 1 werden vom abgetasteten Objekt 2, 2' ermittelte Entfernungsvektoren E des abzutastenden Objekts als 3D-Tripel an die Auswerteeinheit 3 kommuniziert. Der Programmcode kann auf einem Computerprogrammprodukt computerlesbar gespeichert sein, derart, dass der Programmcode geeignet ist, zur Ausführung mindestens der folgenden Schritte des Verfahrens zum Vermessen von Raumpunkten mittels eines Laserscanners 1:

- Bestimmen eines Nahbereichs N um einen zentralen Raumpunkt S mit mindestens zwei Raumpunkten,
- Aggregieren von Koordinaten r, θ, φ der Raumpunkte im bestimmten Nahbereich N, und
- Ersetzen von Koordinaten r, θ, φ des zentralen Raumpunktes S durch das Aggregieren von Koordinaten r, θ, φ der Raumpunkte im bestimmten Nahbereich N.

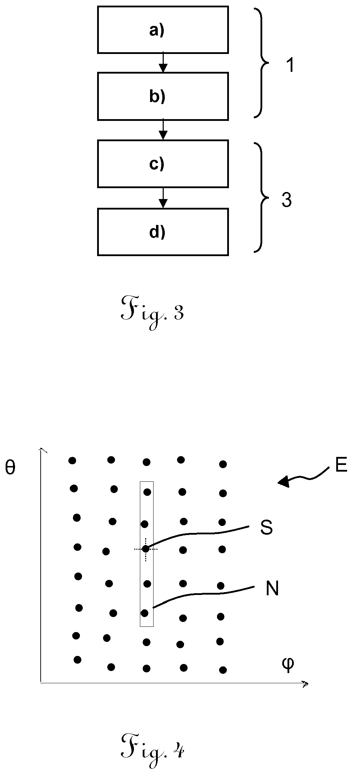

Figur 3 zeigt ein Flussdiagramm der Schritte des Verfahrens zum Betreiben des Laserscanners 1 im System mit der Auswertungseinheit 3. In einem Schritt a) wird das Abtasten von mindestens drei Raumpunkten eines Objekts und das Ermitteln eines Entfernungsvektors E mit mindestens einer Koordinate r, θ, φ vom Laserscanner 1 zum abgetasteten Raumpunkt des Objekts 2, 2' durch den Laserscanner 1 ausgeführt. In einem Schritt b) werden charakteristische Grössen wie Signalamplituden Aj, die Signal-Rauschverhältnisse SRVj oder weitere statistische Merkmale der Messdaten bestimmt. Die Bezeichnung j steht dabei für die drei Koordinatenachsen r, θ, φ. Schritt b) ist optional und wird durch die Einstellung des Messablaufs oder Laserscanners 1 festgelegt. Ein Schritt c) umfasst das Bestimmen eines Nahbereichs mit mindestens zwei Raumpunkten, die in einem Winkelraum benachbart zu einem zentralen Raumpunkt sind. In einem Schritt d) wird durch das Computerprogramm-Mittel der Auswertungseinheit 3 die Aggregation von Koordinaten der ermittelten Entfernungsvektoren im bestimmten Nahbereich ausgeführt. Letztere Schritte c) und d) werden vorzugsweise für alle abgetasteten Raumpunkte ausgeführt. Ein bestehender Laserscanner 1 zum Abtasten von Raumpunkten und zum Ermitteln eines Entfernungsvektors kann mit einer Auswertungseinheit 3 oder einem Computerprogramm-Mittel zum Bestimmen eines Nahbereichs mit mindestens zwei Raumpunkten und zur Aggregation von Koordinaten der ermittelten Entfernungsvektoren im bestimmten Nahbereich nachgerüstet werden.

Die Auswerteeinheit 3 zur Bestimmung eines Nahbereichs und zur Aggregation von Raumpunkten für jeden zentralen Raumpunkt S kann im Laserscanner 1 selbst oder aber auch auf einem externen Computer lokalisiert sein. Vorzugsweise findet die Berechnung aber auf dem Laserscanner 1 direkt während der Punktaufnahme statt, was das Postprocessing erheblich vereinfacht. Auch kann durch die Online-Verbesserung die Filterung auf dem Laserscanner 1 durch Einstellungen des Operators angepasst werden und so beispielsweise nur die Distanzen aggregieren lassen. Dies kann vor allem bei Objekten im kurzen Distanzbereich wie bei Innenraumaufnahmen sinnvoll sein, wo die Winkelfehler die Genauigkeit der Raumpunkte kaum beeinflussen, also praktisch fehlerfrei sind. Die Streuungen der ermittelten Distanzen r sind hingegen wesentlich, sodass die vereinfachte Aggregation reduziert auf die Distanzkoordinaten r bereits eine merkbare Verbesserung der Koordinaten der Raumpunkte bewirkt.

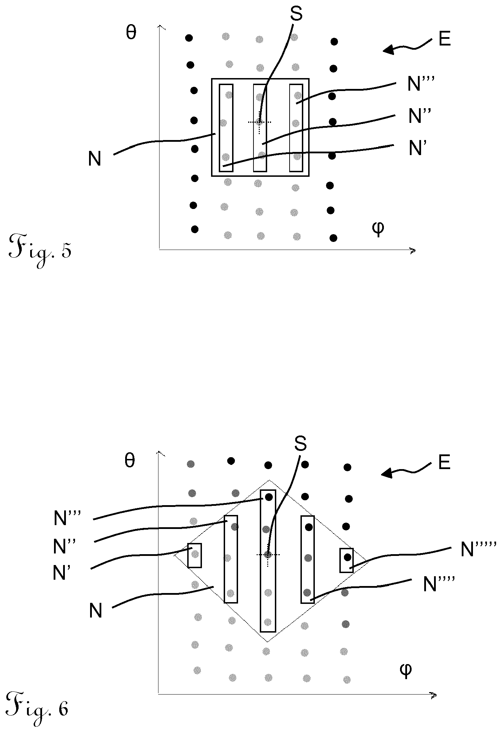

Die Figuren 4 bis 6 zeigen drei Ausführungsformen der Aggregation der Koordinaten r, θ, φ von ermittelten Entfernungsvektoren E mit der Auswertungseinheit 3. Dazu werden Distanzen r im Winkelraum des Azimutwinkels φ und des Polarwinkels θ aufgetragen. Die einzelnen, mehr oder weniger gleichmässig voneinander beabstandeten Punkte der Figuren 4 bis 6 sind abgetastete Raumpunkte. Dabei wird der Laserstrahl 15 um die horizontale Schwenkachse 12 geschwenkt, und eine erste Spalte von Raumpunkten wird von unten nach oben (oder auch umgekehrt) mit der Scannschrittgrösse des Polarwinkels θ abgetastet. Nach dem Abtasten der ersten Spalte von Raumpunkten wird der Laserstrahl 15 mit einer Scannschrittgrösse des Azimutwinkels φ von links nach rechts (oder auch umgekehrt) um die vertikale Schwenkachse 13 geschwenkt, und eine zweite Spalte von Raumpunkten wird von unten nach oben mit der Scannschrittgrösse des Polarwinkels θ abgetastet. Einzig zur klaren Darstellung sind die Distanzen r als Grauwertbild aufgetragen, wobei der Distanz r ein mehr oder weniger heller oder dunkler Grauwert zugeordnet wird; je dunkler der Grauwert, desto grösser ist die Distanz r. Zudem ist zur klaren Darstellung die Distanz r eines zentralen Raumpunktes S als Referenz auf 1,00 normiert. In Figur 4 sind die Distanzen r alle weitgehend gleich dunkelgrau (0,95 < r ≤ 1,05) und modellieren eine Ebene des abgetasteten Objekts 2, 2'. In Figur 5 sind die Distanzen r in einem mittleren Bereich grau (0,95 < r ≤ 1,05) und in zwei äusseren Bereichen dunkelgrau (1,05 < r ≤ 1,15) und modellieren eine Nut/einen Steg des abgetasteten Objekts 2 In Figur 6 sind die Distanzen r in einem linken unteren Bereich hellgrau (0,85 < r ≤ 0,95); in einem mittleren Bereich sind sie grau (0,95 < r ≤ 1,05); und in einem rechten oberen Bereich sind sie dunkelgrau (1,05 < r ≤ 1,15) und modellieren eine Schräge des abgetasteten Objekts 2, 2'.

Zur Aggregation wird jeder abgetastete Raumpunkt einmal als zentraler Raumpunkt S verwendet, und um den zentralen Raumpunkt S wird ein Nahbereich N bestimmt. Jeder Nahbereich N weist im Winkelraum mehrere benachbarte abgetastete Raumpunkte bezogen auf den zentralen Raumpunkt S auf. In den Figuren 4 bis 6 sind die zentralen Raumpunkte S jeweils mit einem Fadenkreuz gekennzeichnet. Die im Winkelraum benachbarten abgetasteten Raumpunkte sind in nächster Nähe zum Raumpunkt S angeordnet. Bei der Aggregation der Distanzen r wird eine gewichtete Summe der Distanzen r im bestimmten Nahbereich N gebildet, so dass ein gewichtetes arithmetisches Mittel w entsteht. Somit werden positive und negative Abweichungen der Distanzen r zu im Winkelraum benachbarten abgetasteten Raumpunkte bezüglich des zentralen Raumpunktes S gemessen. Bei Kenntnis der vorliegenden Erfindung kann der Fachmann den Ablenkkopf nur um eine einzige Schwenkachse verschwenken. Auch kann der Fachmann den Laserstrahl gleichzeitig um zwei Schwenkachsen verschwenken. Zudem kann der Fachmann auf ein Auftragen der Distanzen als Grauwertbild und auf eine Normierung der Distanzen verzichten. Auch kann der Fachmann zur Aggregation anstatt der Distanzen der ermittelten Entfernungsvektoren auch Beträge mindestens eines Winkels zwischen dem Laserscanner und dem abgetasteten Raumpunkt des Objekts verwenden. Auch kann der Fachmann zur Aggregation anstatt der Distanzen der ermittelten Entfernungsvektoren Beträge von gemessenen Intensitäten (Grauskalen) bzw. gemessenen Spektralwerten (Farben) verwenden. Natürlich kann der Fachmann zur Aggregation auch Distanzen der ermittelten Entfernungsvektoren mit Beträgen von Winkeln bzw. Beträgen von gemessenen Intensitäten (Grauskalen) bzw. Beträgen von gemessenen Spektralwerten (Farben) kombinieren.

Gemäss Figur 4 weist ein eindimensionaler Nahbereich N mindestens drei abgetastete Raumpunkte auf. Die abgetasteten Raumpunkte sind in einer Spalte mit der Scannschrittgrösse des Polarwinkels θ in direkter zeitlicher Abfolge vom Laserscanner 1 abgetastet worden. Ein abgetasteter Raumpunkt wird derart als zentraler Raumpunkt S des eindimensionalen Nahbereichs N verwendet, dass mindestens ein im Winkelraum benachbarter Raumpunkt zeitlich vor dem zentralen Raumpunkt S abgetastet worden ist und dass mindestens ein im Winkelraum benachbarter Raumpunkt zeitlich nach dem zentralen Raumpunkt S abgetastet worden ist.

Heutzutage werden 3D-Messaufgaben aber auch mit zeitlich parallel erfassenden Laserscannern 1, sogenannten 3D-Kameras durchgeführt. Solche 3D-Kameras haben bildgebende Flächen-Sensoren mit pixelweisen Zeitmessschaltungen, mittels denen sie die Laufzeit oder Phasenverschiebung des vom Objekt zurückgeworfenen, modulierten Lichtkegels erfassen. In diesem Fall ist keine zeitliche Abfolge für die Vielzahl von Entfernungsvektoren E festgelegt. Es kann aber davon ausgegangen werden, dass die Speicherung der simultan erfassten Raumpunkte in einer Anordnung erfolgt, die der zeitlichen Abfolge eines seriell scannenden Instruments äquivalent ist. Der Ausdruck "zeitliche Abfolge der Raumpunkte" soll daher auch für parallel aufnehmende Laserscanner 1 gelten.

Um den Informationsgehalt des ermittelten Entfernungsvektors bei der Aggregation nicht zu verfälschen, wird ein symmetrisches Mitteln vorgenommen, d. h. im Winkelraum wird eine Anzahl symmetrisch angeordneter benachbarter abgetasteter Raumpunkte in Bezug zum zentralen Raumpunkt S bestimmt. Bei Verwendung einer asymmetrischen Anordnung von benachbarten abgetasteten Raumpunkten in Bezug zum zentralen Raumpunkt S kann der zu bildende Mittelwert verfälscht werden, beispielsweise eine real nicht existierende Neigung der Oberfläche des Objekts 2, 2' angeben.

Konkret weist der eindimensionale Nahbereich N der Ausführungsform nach Figur 4 fünf abgetastete Raumpunkte auf, von denen der dritte Raumpunkt als zentraler Raumpunkt S verwendet wird und zwei Raumpunkte in einer Nachbarschaft von einer bzw. zwei Scannschrittgrösse/n des Polarwinkels θ zeitlich vor dem zentralen Raumpunkt S abgetastet worden sind und zwei Raumpunkte in einer Nachbarschaft von einer bzw. zwei Scannschrittgrösse/n des Polarwinkels θ zeitlich nach dem zentralen Raumpunkt S abgetastet worden sind. Dieser symmetrische Nahbereich N wird aggregiert. Die Aggregation filtert mit einem Filter Θ in einer Dimension entlang der Scannschrittgrösse des Polarwinkels θ um die horizontale Schwenkachse 12 des Laserscanners 1. Der Filter Θ kann einheitlich sein, d. h. jeder Raumpunkt im Nahbereich wird gleich gewichtet, was einen einheitlichen Filter $\Theta = \frac{1}{5}\begin{bmatrix} 1 & 1 & 1 & 1 & 1 \end{bmatrix}$ ergibt. Der

Filter Θ kann aber auch uneinheitlich sein, bei dem der zentrale Raumpunkte S doppelt gewichtet wird und bei dem auch die beiden Raumpunkte, die sich in nächster Nachbarschaft zum zentralen Raumpunkt S befinden, doppelt gewichtet werden, was einen zentral gewichteten Filter $\Theta = \frac{1}{8}\begin{bmatrix} 1 & 2 & 2 & 2 & 1 \end{bmatrix}$ ergibt. Der uneinheitliche Filter Θ kann auch ein parabelförmig gewichteter Filter $\Theta = \frac{1}{35}\begin{bmatrix} -3 & 12 & 17 & 12 & -3 \end{bmatrix}$ sein.

Für einen einheitlichen Filter Θ wird für den eindimensionalen Nahbereich N gemäss Formel (2) ein gleich gewichtetes arithmetisches Mittel w ermittelt:

$$w = \frac{1}{5}\begin{bmatrix} 1 & 1 & 1 & 1 & 1 \end{bmatrix} \cdot \begin{bmatrix} 10{,}022 & 10{,}002 & 10{,}010 & 9{,}097 & 10{,}047 \end{bmatrix}^{T} \qquad (2)$$

wobei die Werte in dem zweiten Vektor den Distanzen r der Raumpunkte im Nahbereich N vom Laserscanner 1 entsprechen.

Für einen zentral gewichteten Filter Θ wird für den eindimensionalen Nahbereich N gemäss Formel (2') ein zentral gewichtetes arithmetisches Mittel w ermittelt:

$$w = \frac{1}{8}\begin{bmatrix} 1 & 2 & 2 & 2 & 1 \end{bmatrix} \cdot \begin{bmatrix} 10{,}022 & 10{,}002 & 10{,}010 & 9{,}097 & 10{,}047 \end{bmatrix}^{T} \qquad (2')$$

Für einen parabelförmig gewichteten Filter Θ wird für den eindimensionalen Nahbereich N gemäss Formel (2") ein parabelförmig gewichtetes arithmetisches Mittel w ermittelt:

$$w = \frac{1}{35}\begin{bmatrix} -3 & 12 & 17 & 2 & -3 \end{bmatrix} \cdot \begin{bmatrix} 10{,}022 & 10{,}002 & 10{,}010 & 9{,}097 & 10{,}047 \end{bmatrix}^{T} \qquad (2'')$$

Gemäss Figur 5 setzt sich ein zweidimensionaler Nahbereich N aus drei eindimensionalen Bereichsegmenten N', N", N'" mit neun abgetasteten Raumpunkten zusammen. Jedes Bereichsegment N', N", N'" weist pro Spalte drei abgetastete Raumpunkte mit der Scannschrittgrösse des Polarwinkels θ auf. Die drei Bereichsegmente N', N", N'" liegen in Nachbarschaft von kleiner oder gleich zwei Scannschrittgrössen des Azimutwinkels φ zueinander. Die drei Bereichsegmente N', N", N'" können, müssen aber nicht aneinander grenzen. Ein abgetasteter Raumpunkt wird derart als zentraler Raumpunkt S des zweidimensionalen Nahbereichs N in einem zentralen Bereichsegment N" verwendet, dass mindestens ein erstes Bereichsegment N' mehrere im Winkelraum benachbarte Raumpunkte aufweist, die zeitlich vor dem zentralen Raumpunkt S abgetastet worden sind und dass mindestens ein zweites Bereichsegment N'" mehrere im Winkelraum benachbarte Raumpunkte aufweist, die zeitlich nach dem zentralen Raumpunkt S abgetastet worden sind. Die acht im Winkelraum benachbarten Raumpunkte befinden sich zum zentralen Raumpunkt S in einer beispielhaften Nachbarschaft von einer bzw. $\sqrt{2}$ Scannschrittgrösse/n des Polarwinkels θ und/oder des Azimutwinkels φ. Dieser symmetrische Nahbereich N wird aggregiert. Die Aggregation filtert mit einem Filter Θ in zwei Dimensionen, nämlich entlang der Scannschrittgrösse des Azimutwinkels φ um die vertikale Schwenkachse 13 des Laserscanners 1 und entlang der Scannschrittgrösse des Polarwinkels θ um die horizontale Schwenkachse 12 des Laserscanners 1. Der Filter Θ kann einheitlich sein, d. h. jeder Raumpunkt im Nahbereich wird gleich gewichtet, was einen einheitlichen Filter

$$\Theta = \frac{1}{9}\begin{bmatrix} 1 & 1 & 1 \\ 1 & 1 & 1 \\ 1 & 1 & 1 \end{bmatrix}$$ mit einer 3×3-Matrix ergibt. Der Filter Θ kann aber auch uneinheitlich sein, der zentrale Raumpunkte S wird mit $4(2-\sqrt{2})$ gewichtet, und die vier Raumpunkte, die sich in einer Nachbarschaft von $\sqrt{2}$ Scannschrittgrössen zum zentralen Raumpunkt S befinden, werden mit $\sqrt{2}$ gewichtet, was einen zentral gewichteten Filter

$$\Theta = \frac{1}{12}\begin{bmatrix} 1 & \sqrt{2} & 1 \\ \sqrt{2} & 4\left(2-\sqrt{2}\right) & \sqrt{2} \\ 1 & \sqrt{2} & 1 \end{bmatrix}$$ mit einer 3x3-Matrix ergibt.

Für einen einheitlichen Filter $\Theta$ wird für den zweidimensionalen Nahbereich N gemäss Formel (3) ein gleich gewichtetes arithmetisches Mittel w ermittelt:

$$w = \sum_{i,j=1}^{3} \Theta_{i,j} \cdot r_{i,j}$$

$$= \frac{1}{9}\left(10{,}022 + 10{,}005 + 10{,}013 + 10{,}002 + 10{,}010 + 9{,}097 + 10{,}022 + 10{,}047 + 10{,}018\right) \quad (3)$$

wobei mit $r_{i,j}$ die Entfernung des j-ten Raumpunktes in der i-ten Spur des Nahbereichs bezeichnet werde. Für einen zentral gewichteten Filter $\Theta$ wird für den zweidimensionalen Nahbereich N gemäss Formel (3') ein zentral gewichtetes arithmetisches Mittel w ermittelt:

$$w = \sum_{i,j=1}^{3} \Theta_{i,j} \cdot r_{i,j}$$

$$= \frac{1}{12}\left(\begin{array}{l} 10{,}022 + \sqrt{2}*10{,}005 + 10{,}013 + \sqrt{2}*10{,}002 + 4*\left(2-\sqrt{2}\right)*10{,}010... \\ ...+\sqrt{2}*9{,}097 + 10{,}022 + \sqrt{2}*10{,}047 + 10{,}018 \end{array}\right) \quad (3')$$

Gemäss Figur 6 wird ein zweidimensionaler Nahbereich N verwendet. Mehrere Raumpunkte werden vom Laserscanner 1 in zeitlicher Abfolge abgetastet. Ein abgetasteter Raumpunkt derart als zentraler Raumpunkt S verwendet, dass mindestens ein im Winkelraum benachbarter abgetasteter Raumpunkt zeitlich vor dem zentralen Schwerpunkt S abgetastet worden ist, und dass mindestens ein im Winkelraum benachbarter abgetasteter Raumpunkt zeitlich nach dem zentralen Schwerpunkt S abgetastet worden ist. Konkret setzt sich der zweidimensionale Nahbereich N der Ausführungsform nach Figur 6 aus fünf Bereichssegmenten N', N'', N''', N'''', N''''' mit dreizehn abgetasteten Raumpunkten zusammen. Davon sind sechs im Winkelraum benachbarte Raumpunkte vor dem zentralen Schwerpunkt S abgetastet worden, und sechs im Winkelraum benachbarte Raumpunkte sind zeitlich nach dem zentralen Schwerpunkt S abgetastet worden. Das erste Bereichsegment N' und das fünfte Bereichssegment N''''' weisen pro Spalte einen abgetasteten Raumpunkt auf; das zweite Bereichssegment N'' und das vierte Bereichssegment N'''' weisen pro Spalte drei abgetastete Raumpunkte mit der Scannschrittgrösse des Polarwinkels $\theta$ auf; und das dritte Bereichssegment N''' weist pro Spalte fünf abgetastete Raumpunkte mit der Scannschrittgrösse des Polarwinkels $\theta$ auf. Die fünf Bereichssegmente N', N'', N''', N'''', N''''' liegen in Nachbarschaft von kleiner oder gleich zwei Scannschrittgrössen des Azimutwinkels $\varphi$ zueinander. Somit befinden sich die zwölf Raumpunkte zum zentralen Schwerpunkt S im Winkelraum in einer Nachbarschaft von einer bis zwei Scannschrittgrösse/n des Azimutwinkels $\varphi$ und/oder des Polarwinkels $\theta$. Dieser symmetrische, aus dreizehn Entfernungsvektoren bestehende Nahbereich N wird aggregiert. Die Aggregation filtert mit einem Filter $\Theta$ in zwei Dimensionen, nämlich entlang der Scannschrittgrösse des Azimutwinkels $\varphi$ um die vertikale Schwenkachse 13, entlang der Scannschrittgrösse des Polarwinkels $\theta$ um die horizontale Schwenkachse 12 des Laserscanners 1. Der Filter $\Theta$ kann einheitlich sein, das heisst jeder Raumpunkt im Nahbereich wird gleich gewichtet, was einen einheitlichen Filter

$$\Theta = \frac{1}{13}\begin{bmatrix} 1 & 1 & 1 & 1 & 1 \\ 0 & 1 & 1 & 1 & 0 \\ 0 & 1 & 1 & 1 & 0 \\ 0 & 0 & 1 & 0 & 0 \\ 0 & 0 & 1 & 0 & 0 \end{bmatrix}$$ mit einer 5×5-Matrix ergibt.

Für einen einheitlichen Filter Θ wird für den zweidimensionalen Nahbereich N gemäss Formel (4) ein gewichtetes arithmetisches Mittel w ermittelt:

$$w = \sum_{i=1}^{5} \sum_{j=1}^{5-2\cdot|i-3|} \Theta_{i,j} \cdot r_{i,j} \qquad (4)$$

wobei mit $r_{i,j}$ die Entfernung des j-ten Raumpunktes in der i-ten Spur des Nahbereichs bezeichnet werde. Bei Kenntnis der vorliegenden Erfindung kann der Fachmann bei der Aggregation anstatt eines arithmetischen Mittels auch ein geometrisches Mittel, ein harmonisches Mittel, einen Median usw. bilden. Auch kann der Fachmann eine Aggregation auf Basis einer Wavelet-Zerlegung, einer Fourier-Transformation, eines Kalman-Filters, unter Verwendung partieller Differentialgleichungen, Diffusionsgleichungen, der Methode der Totalvariation, usw. realisieren. Auch kann der Fachmann anstatt der beispielhaft dargestellten mehrdimensionalen Nahbereiche mit 3x3- und 5×5-Matrixen auch mehrdimensionale Nahbereiche mit 4×4-Matrix, 7×7-Matrix usw. verwenden. Zudem kann der Fachmann anstatt eines symmetrischen Nahbereichs auch einen asymmetrischen Nahbereich verwenden, beispielsweise wenn die abgetasteten Raumpunkte nicht so symmetrisch wie in den Figuren 4 bis 6 dargestellt angeordnet sind, und somit zwangsläufig auch in der Nachbarschaft eines zentralen Raumpunktes asymmetrisch angeordnet sind, in diesem Fall kann eine ungleiche Anzahl von Raumpunkten vor und nach dem zentralen Raumpunkt abgetastet werden.

Es ist nicht zwingend, die Raumpunkte vom Laserscanner 1 mit einer vorgegebenen Scannschrittgrösse des Winkels θ, φ abzutasten. Auch kann der Fachmann bei Kenntnis der Erfindung einen nicht getriggerten Laserscanner verwenden, der keine solche Scannschrittgrösse aufweist.

Sollten für einzelne Scannrichtungen (θ, φ) keine Messwerte von Distanzen r vorliegen, so kann der Fachmann durch Interpolation in Kombination mit der beschriebenen Aggregation geeignete Werte von Distanzen r erzeugen.

Ebenso kann der Fachmann bei Kenntnis der vorliegenden Erfindung die gemessenen Intensitäten (Grauwerte) und/oder Spektralwerte (Farben) auf dieselbe Weise aggregieren wie die Distanzen.

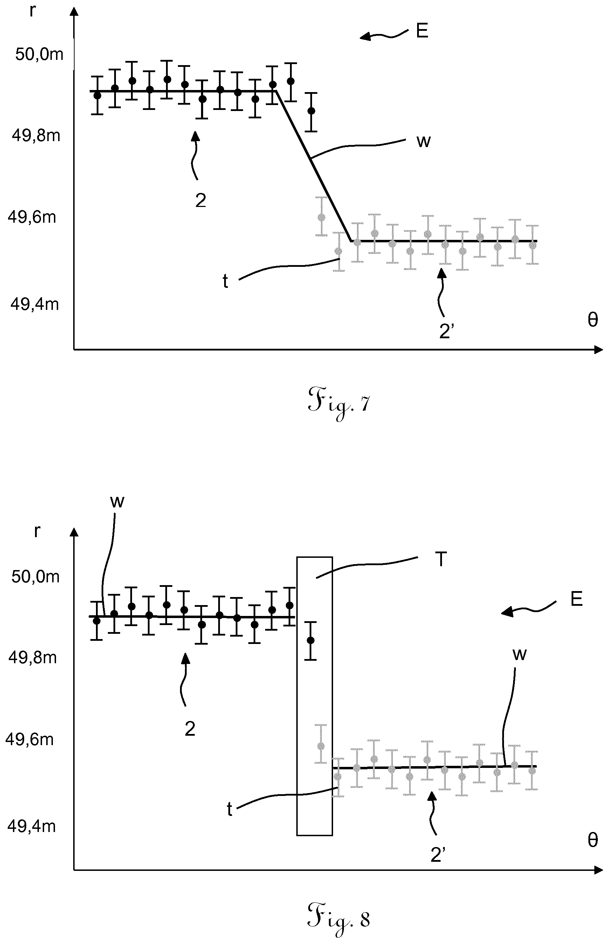

Die Figuren 7 und 8 zeigen weitere Darstellungen der Aggregation der ermittelten Entfernungsvektoren E mit der Auswertungseinheit 3. Die Ordinate gibt die Distanzen r der an die Auswertungsvorrichtung 3 kommunizierten Entfernungsvektoren E an, die Abszisse gibt den Polarwinkel θ der an die Auswertungsvorrichtung 3 kommunizierten Entfernungsvektoren E an. Im linken Bereich der ermittelten Entfernungsvektoren E liegen die Distanzen r der Entfernungsvektoren E in einem Wertebereich von 49,8m und 50,0m zum ersten Würfel 2 nach Figur 1; im rechten Bereich der ermittelten Entfernungsvektoren E liegen die Distanzen r der Entfernungsvektoren E in einem Wertebereich 49,4m und 49,6m zum zweiten Würfel 2' nach Figur 1. Das von der Auswertungseinheit 3 ermittelte gewichtete arithmetische Mittel w ist in Figur 7 durchgehend für alle ermittelten Entfernungsvektoren E eingetragen und in Figur 8 nicht durchgehend nur für einen Teil der ermittelten Entfernungsvektoren E des linken Bereichs und des rechten Bereichs eingetragen.

Nun verdeckt der zweite Würfel 2', der beispielsweise einen Baum schematisiert, teilweise das Sichtfeld des Laserscanners 1 auf den ersten Würfel 2, der beispielsweise ein Gebäude schematisiert. Gerade im Übergangsbereich des Sichtfelds des Laserscanners 1 vom zweiten Würfel 2' zum ersten Würfel 2, verfälscht die Aggregation der Koordinaten r, θ, φ von ermittelten Entfernungsvektoren E den Informationsgehalt der ermittelten Entfernungsvektoren E, indem sie den sprunghaften Übergang der Distanzen r in einen fliessenden Übergang des arithmetischen Mittels w aggregiert, welcher real nicht existiert.

Um solche Verfälschungen zu vermeiden, werden gemäss Figur 8 nur Koordinaten r, θ, φ solcher Raumpunkte aggregiert, deren gemessene Distanzen r sich von der im zentralen Raumpunkt S gemessenen Distanz $r_0$ um nicht mehr als einen definierten Schwellenwert t unterscheiden. In einem mittleren Ausschlussbereich T ist daher für die ermittelten Entfernungsvektoren E kein gewichtetes arithmetisches Mittel w eingetragen.

Der Schwellenwert t des zentralen Raumpunktes S ist in den Figuren 7 und 8 als Balken eingetragen. Die Länge des Balkens entspricht dem Schwellenwert t und beträgt einheitlich 0,10m.

Der Schwellenwert t setzt sich gemäss Gleichung (5) aus einer Summe eines konstanten Verschiebungswerts $t_0$ und eines Messwerts $t_1$ zusammen.

$$t = t_0 + t_1 \qquad (5)$$

In einer ersten Ausführungsform ist der Messwert $t_1$ proportional zu der vom Detektor 17 gemessenen Amplitude A des erfassten Lichts 15'. Die Amplitude A hängt von mehreren Parametern wie der Reflektivität der Oberfläche des Objekts 2, 2', der Distanz r zwischen dem Laserscanner 1 und dem Objekt 2, 2', dem Einfallswinkel des Lichts 15 auf das Objekt 2, 2', usw. ab. Für jeden ermittelten Entfernungsvektor E zwischen dem Laserscanner 1 und dem abgetasteten Raumpunkt wird die vom Detektor 17 gemessene Amplitude A mit dem 3D-Tripel des ermittelten Entfernungsvektors E auf dem computerlesbaren Datenspeicher gespeichert. Andere Exponenten sind möglich. Anstelle der inversen Proportionalität:

$$\mathrm{t_1 ~\sim~ A^{-1}} \tag{6}$$

kann auch ein Zusammenhang:

$$\mathrm{t_1 ~\sim~ A^{-1/2}} \tag{6'}$$

$$\mathrm{t_1 ~\sim~ A^{-3/2}} \tag{6''}$$

verwendet werden. Allgemein ist der Messwert $t_1$ proportional zu einer Potenz der gemessenen Amplitude A mit einem beliebigen reellen Exponenten. Anstelle der vom Detektor 17 gemessenen Amplitude A eines ermittelten Entfernungsvektors E kann auch eine gemittelte Amplitude A' der gemessenen Amplituden A von mehreren ermittelten Entfernungsvektoren E verwendet werden.

In einer zweiten Ausführungsform wird der Messwert $t_1$ zu einem Signal-Rausch-Verhältnis SRV des erfassten Lichts 15' abgeleitet. Beispielsweise ist der Messwert $t_1$ invers proportional zum Signal-Rausch-Verhältnis SRV des erfassten Lichts 15' wie in der Formel (7) dargestellt.

$$\mathrm{t_1 ~\sim~ SRV^{-1}} \tag{7}$$

Auch hier sind andere Exponenten des Signal-Rausch-Verhältnisses SRV möglich.

In einer dritten Ausführungsform ist der Schwellenwert t proportional zu einer Differenz eines Parameters p und der Distanz r vom Laserscanner 1 zum abgetasteten Raumpunkt wie in der Formel (8) dargestellt.

$$\mathrm{t ~\sim~ (p-r)^{-1}} \tag{8}$$

Die Differenz kann natürlich auch andere Exponenten haben.

In einer weiteren Ausführungsform kann der Schwellenwert t auch abhängig von der lokalen Krümmung (1. Ordnung oder höherer Ordnung) des gescannten Objekts gewählt werden.

Da der Entfernungsvektor E im generellen Fall ein 3D-Tripel bezogen auf ein (r, θ, φ)-Koordinatensystem darstellt, gibt es grundsätzlich drei Schwellenwerte t, den beschriebenen für r, aber auch einen für θ und einen für φ. Alle drei Schwellenwerte t lassen sich aus den statistischen Signalkennwerten A, SRVr, SRVθ, SRVφ und den objektbezogenen Trajektorien der Raumpunktfolgen wie beispielsweise der diskutierten lokalen Krümmung ableiten. Beispielsweise lauten die Schwellenwerte t_j gemäss Formel (9):

$$\mathrm{t\_j = function(A, ~SRVj, ~\ldots)} \tag{9}$$

Dabei steht A für die Signalamplitude der Distanzmessung, SRVj für statistische Rauschangaben der Koordinatenmesswerte r, θ, φ. Im einfachsten Fall kann die Streuung als 2. Moment der statistischen Verteilung der jeweiligen Variable eingesetzt werden.

Für abgetastete Raumpunkte, die im Ausschlussbereich T die Grenze des Schwellenwerts t überschreiten, kann der Filter Θ angepasst werden. Falls beispielsweise im zweidimensionalen Nahbereich N gemäss Figur 5 der dritte Raumpunkt im ersten Bereichsegment N' und der erste Raumpunkt im dritten Bereichsegment N" die Grenze des Schwellenwerts t überschreiten, kann der einheitliche Filter $\Theta = \dfrac{1}{9}\begin{bmatrix} 1 & 1 & 1 \\ 1 & 1 & 1 \\ 1 & 1 & 1 \end{bmatrix}$ gemäss Formel (3) durch einen adap-

tierter Filter $\Theta = \dfrac{1}{7}\begin{bmatrix} 0 & 1 & 1 \\ 1 & 1 & 1 \\ 1 & 1 & 0 \end{bmatrix}$ ersetzt werden, der diese, die Grenzen des Schwellenwerts t überschreitenden Raumpunkte nicht berücksichtigt. Entsprechend kann der zentral gewichtende Filter

$\Theta = \dfrac{1}{12}\begin{bmatrix} 1 & \sqrt{2} & 1 \\ \sqrt{2} & 4(2-\sqrt{2}) & \sqrt{2} \\ 1 & \sqrt{2} & 1 \end{bmatrix}$ gemäss Formel (3') durch einen adaptierten Filter

$\Theta = \dfrac{1}{10}\begin{bmatrix} 0 & \sqrt{2} & 1 \\ \sqrt{2} & 4(2-\sqrt{2}) & \sqrt{2} \\ 1 & \sqrt{2} & 0 \end{bmatrix}$ ersetzt werden, der diese, die Grenzen des Schwellenwerts t überschreitenden Raumpunkte nicht berücksichtigt. Vorteilhafterweise ist der adaptierte Filter symmetrisch, d. h. falls beispielsweise im zweidimensionalen Nahbereich N gemäss Figur 5 nur der dritte Raumpunkte im ersten Bereichsegment N' die Grenze des Schwellenwerts t überschreitet, wird aus Symmetriegründen auch der erste Raumpunkt im dritten Bereichsegment N" nicht berücksichtigt.

In einer weiteren Ausführungsform kann auch die Grösse und die Gewichtung des Filters in Abhängigkeit von den gemessenen Distanzen, Amplituden und dem SNR bestimmt werden, so dass beispielsweise für kleine und grosse Distanzen unterschiedliche Filter verwendet werden.

In einer anderen Ausführungsform kann der Filter derart ausgelegt sein, dass die Mittelung der 3D-Punkte nicht nur auf den Distanzmesswerten sondern auf allen drei Messkoordinaten r, θ, φ erfolgt, dabei wird beispielsweise eine der Formeln (2), (2'), (2"), (3), (3') für jede der Koordinaten r, θ, φ angewendet.

Es versteht sich, dass diese dargestellten Figuren nur mögliche Ausführungsformen schematisch darstellen. Die verschiedenen Ansätze können ebenso miteinander sowie mit Verfahren und Geräten des Standes der Technik kombiniert werden. Insbesondere können die Ausführungsformen des Schwellenwerts miteinander kombiniert werden.

**Patentansprüche**

1. Verfahren zum Vermessen von Raumpunkten mittels eines Laserscanners (1), mit den Schritten

- Abtasten einer Vielzahl von Raumpunkten eines Objekts (2, 2'),
- Ermitteln von Koordinaten (r, θ, φ) des jeweiligen Raumpunktes, wobei der Laserscanner (1) den Koordinatenursprung bildet und die Koordinaten eine Distanz (r) und zwei Winkel (θ, φ) umfassen,
- Bestimmen eines zweidimensionalen Nahbereichs (N) um einen zentralen Raumpunkt (S), aufweisend

  ▪ mindestens zwei Raumpunkte, deren erste Winkelkoordinate (θ) in einem definierten Winkelraum benachbart zu der des zentralen Raumpunktes (S) ist, und
  ▪ mindestens zwei Raumpunkte, deren zweite Winkelkoordinate (φ) in einem definierten Winkelraum benachbart zu der des zentralen Raumpunktes (S) ist,

- Aggregieren von Koordinaten (r, θ, φ) der Raumpunkte im bestimmten Nahbereich (N), und
- Ersetzen von Koordinaten (r, θ, φ) des zentralen Raumpunktes (S) durch das Aggregieren von Koordinaten (r, θ, φ) der Raumpunkte im bestimmten Nahbereich (N),

**dadurch gekennzeichnet, dass**

- die Raumpunkte vom Laserscanner (1) in mindestens drei Bereichsegmenten (N',N",N''',N'''',N''''') mit der Scannschrittgrösse eines ersten Winkels (θ) abgetastet werden; und
- unter Verwendung dieser
Bereichsegmente (N',N",N''') ein Nahbereich (N) bestimmt wird, wobei mindestens solche Bereichsegmente (N',N'',N''',N'''',N''''') als zum zentralen Raumpunkt (S) benachbart gelten, die kleiner oder gleich zwei Scannschrittgrössen eines zweiten Winkels ($\varphi$) um den zentralen Raumpunkt (S) sind.

2. Verfahren nach Anspruch 1,
   **dadurch gekennzeichnet, dass**
   die Raumpunkte vom Laserscanner (1) mit einer Scannschrittgrösse eines Winkels ($\theta$, $\varphi$) abgetastet werden, insbesondere wobei unter Verwendung dieser abgetasteten Raumpunkte ein Nahbereich (N) bestimmt wird, wobei mindestens solche abgetastete Raumpunkte als zum zentralen Raumpunkt (S) benachbart gelten, die kleiner oder gleich zwei Scannschrittgrössen des Winkels ($\theta$, $\varphi$) um den zentralen Raumpunkt (S) sind.

3. Verfahren nach Anspruch 1 oder Anspruch 2,
   **dadurch gekennzeichnet, dass**
   das Aggregieren von Koordinaten (r, $\theta$, $\varphi$) im bestimmten Nahbereich (N) durch einen einstellbaren Filter ($\Theta$) gewichtet wird, wobei abgetastete Raumpunkte, deren gemessene Distanzen (r) sich von der im zentralen Raumpunkt (S) gemessenen Distanz ($r_0$) um mehr als einen definierten Schwellenwert (t) unterscheiden, durch einen adaptierten Filter ($\Theta$) herausgefiltert werden, insbesondere wobei die Raumpunkte im Nahbereich (N) vom Filter ($\Theta$) gleich gewichtet werden, oder ungleich, insbesondere zentral und/oder parabelförmig, gewichtet werden.

4. Verfahren nach einem der Ansprüche 1 bis 3,
   **dadurch gekennzeichnet, dass**
   nur Koordinaten (r, $\theta$, $\varphi$) solcher Raumpunkte aggregiert werden, deren gemessene Distanzen (r) sich von der im zentralen Raumpunkt (S) gemessenen Distanz ($r_0$) um nicht mehr als einen definierten Schwellenwert (t) unterscheiden, wobei ein Schwellenwert (t) verwendet wird, der eine Summe aus einem konstanten Verschiebungswert ($t_0$) und einem Messwert ($t_1$) aufweist, insbesondere wobei ein Messwert ($t_1$) verwendet wird, der

   • invers proportional zu einer gemessenen Amplitude (A) des erfassten Lichts (15') ist,
   • proportional zu einer Potenz einer gemessenen Amplitude (A) des erfassten Lichts (15') mit einem reellen Exponenten ist, und/oder
   • vom Signal-Rausch-Verhältnis (SRV) des erfassten Lichts (15') abgeleitet wird.

5. Verfahren zum Vermessen von Raumpunkten mittels eines Laserscanners (1), mit den Schritten

   • Abtasten einer Vielzahl von Raumpunkten eines Objekts (2, 2'),
   • Ermitteln von Koordinaten (r, $\theta$, $\varphi$) des jeweiligen Raumpunktes, wobei der Laserscanner (1) den Koordinatenursprung bildet und die Koordinaten eine Distanz (r) und mindestens einen Winkel ($\theta$, $\varphi$) umfassen,
   • Bestimmen eines Nahbereichs (N) um einen zentralen Raumpunkt (S) mit mindestens zwei Raumpunkten,

     ▪ deren Winkelkoordinaten ($\theta$, $\varphi$) in einem definierten Winkelraum benachbart zu denen des zentralen Raumpunktes (S) sind, und
     ▪ deren gemessene Distanzen (r) sich von der im zentralen Raumpunkt (S) gemessenen Distanz ($r_0$) um nicht mehr als einen definierten Schwellenwert (t) unterscheiden,

   • Aggregieren von Koordinaten (r, $\theta$, $\varphi$) der Raumpunkte im bestimmten Nahbereich (N), und
   • Ersetzen von Koordinaten (r, $\theta$, $\varphi$) des zentralen Raumpunkt (S) durch das Aggregieren von Koordinaten (r, $\theta$, $\varphi$) der Raumpunkte im bestimmten Nahbereich (N),

   **dadurch gekennzeichnet, dass**

   • die Raumpunkte vom Laserscanner (1) in mindestens drei Bereichsegmenten (N',N'',N''',N'''',N''''') mit der Scannschrittgrösse eines ersten Winkels ($\theta$) abgetastet werden; und
   • unter Verwendung dieser Bereichsegmente (N',N'',N''') ein Nahbereich (N) bestimmt wird, bei dem mindestens solche Bereichsegmente (N',N'',N''',N'''',N''''') als zum zentralen Raumpunkt (S) benachbart gelten, die kleiner oder gleich zwei Scannschrittgrössen eines zweiten Winkels ($\varphi$) um den zentralen Raumpunkt (S) sind.

6. Verfahren nach Anspruch 5,
   **dadurch gekennzeichnet, dass**
   ein Schwellenwert (t) verwendet wird, der eine Summe aus einem konstanten Verschiebungswert ($t_0$) und einem Messwert ($t_1$) aufweist, insbesondere wobei ein Messwert ($t_1$) verwendet wird, der

• invers proportional zu einer gemessenen Amplitude (A) des erfassten Lichts (15') ist,
• proportional zu einer Potenz einer gemessenen Amplitude (A) des erfassten Lichts (15') mit einem reellen Exponenten ist, und/oder
• vom Signal-Rausch-Verhältnis (SRV) des erfassten Lichts (15') abgeleitet wird.

**7.** Verfahren nach Anspruch 5 oder Anspruch 6,
**dadurch gekennzeichnet, dass**
das Aggregieren von Koordinaten (r, θ, φ) im bestimmten Nahbereich (N) durch einen einstellbaren Filter (Θ) gewichtet wird, insbesondere wobei die Raumpunkte im Nahbereich (N) vom Filter (Θ)

• gleich gewichtet werden, oder
• ungleich, insbesondere zentral und/oder parabelförmig, gewichtet werden.

**8.** Verfahren nach einem der Ansprüche 5 bis 7,
**dadurch gekennzeichnet, dass**
ein zweidimensionaler Nahbereich (N) um den zentralen Raumpunkt (S) ermittelt wird, insbesondere wobei der Nahbereich (N) aufweist

• mindestens zwei Raumpunkte, deren erste Winkelkoordinate (θ) in einem definierten Winkelraum benachbart zu der des zentralen Raumpunktes (S) ist, und
• mindestens zwei Raumpunkte, deren zweite Winkelkoordinate (φ) in einem definierten Winkelraum benachbart zu der des zentralen Raumpunktes (S) ist.

**9.** Verfahren nach einem der vorangehenden Ansprüche,
**dadurch gekennzeichnet, dass**

• der Nahbereich (N) unter Verwendung von drei in zeitlicher Abfolge vom Laserscanner (1) abgetasteten Raumpunkten bestimmt wird, wobei mindestens ein abgetasteter Raumpunkt zeitlich vor dem zentralen Raumpunkt (S) abgetastet worden ist und mindestens ein abgetasteter Raumpunkt zeitlich nach dem zentralen Raumpunkt (S) abgetastet worden ist, und/oder
• ein im Winkelraum symmetrischer Nahbereich (N) bestimmt wird, insbesondere wobei im Winkelraum eine Anzahl symmetrisch in Bezug zum zentralen Raumpunkt (S) angeordneter Raumpunkte als Nahbereich (N) bestimmt wird.

**10.** Verfahren nach einem der vorangehenden Ansprüche,
**dadurch gekennzeichnet, dass**

• jeweils die Distanz (r) der Raumpunkte im bestimmten Nahbereich (N) aggregiert wird,
• jeweils drei Koordinaten (r, θ, φ) der Raumpunkte im bestimmten Nahbereich (N) aggregiert werden, und/oder
• Koordinaten (r, θ, φ) des zentralen Raumpunktes (S) durch einen Mittelwert (w) von Koordinaten (r, θ, φ) im bestimmten Nahbereich (N) ersetzt werden, insbesondere wobei mindestens die Distanz (r) des zentralen Raumpunktes (S) ersetzt wird.

**11.** System zum Durchführen des Verfahrens nach einem der Ansprüche 1 bis 4, umfassend einen Laserscanner (1), wobei vom Laserscanner (1) die Schritte

• Abtasten einer Vielzahl von Raumpunkten eines Objekts (2, 2'), und
• Ermitteln von Koordinaten (r, θ, φ) für jeden der Raumpunkte, wobei der Laserscanner (1) den Koordinatenursprung bildet und die Koordinaten eine Distanz (r) und mindestens zwei Winkel (θ, φ) umfassen,

ausführbar sind; und wobei das System eine Auswertungseinheit (3) umfasst, die derart konfiguriert ist, dass mindestens die Schritte:

• Bestimmen eines zweidimensionalen Nahbereichs (N) um einen zentralen Raumpunkt (S), aufweisend

  ■ mindestens zwei Raumpunkte, deren erste Winkelkoordinate (θ) in einem definierten Winkelraum benachbart zu derjenigen des zentralen Raumpunktes (S) ist, und
  ■ mindestens zwei Raumpunkte, deren zweite Winkelkoordinate (φ) in einem definierten Winkelraum benachbart zu derjenigen des zentralen Raumpunktes (S) ist,

• Aggregieren von Koordinaten (r, θ, φ) der Raumpunkte im bestimmten Nahbereich (N), und
• Ersetzen von Koordinaten (r, θ, φ) des zentralen Raumpunktes (S) durch das Aggregieren von Koordinaten (r, θ, φ) der Raumpunkte im bestimmten Nahbereich (N)

ausführbar sind,
**dadurch gekennzeichnet, dass**

• der Laserscanner derart konfiguriert ist, dass die Raumpunkte in mindestens drei Bereichsegmenten (N',N'',N''',N'''',N''''') mit der Scannschrittgrösse eines ersten Winkels (θ) abgetastet werden; und
• die Auswertungseinheit (3) derart konfiguriert ist, dass unter Verwendung dieser Bereichsegmente (N',N'',N''') ein Nahbereich (N) bestimmt wird, bei dem mindestens solche Bereichsegmente (N',N'',N''',N'''',N''''') als zum zentralen Raumpunkt (S) benachbart gelten, die kleiner oder gleich zwei Scannschrittgrössen eines zweiten Winkels (φ) um den zentralen Raumpunkt (S) sind.

12. Computerprogrammprodukt mit Programmcode, der auf einem maschinenlesbaren Träger gespeichert ist, zur Ausführung der Schritte des Verfahrens nach einem der Ansprüche 1 bis 4.

13. System zum Durchführen des Verfahrens nach einem der Ansprüche 5 bis 10, umfassend einen Laserscanner (1), wobei vom Laserscanner (1) die Schritte

• Abtasten einer Vielzahl von Raumpunkten eines Objekts (2, 2'), und
• Ermitteln von Koordinaten (r, θ, φ) für jeden der Raumpunkte, wobei der Laserscanner (1) den Koordinatenursprung bildet und die Koordinaten eine Distanz (r) und mindestens einen Winkel (θ, φ) umfassen,

ausführbar sind; und wobei das System eine Auswertungseinheit (3) umfasst, die derart konfiguriert ist, dass mindestens die Schritte:

• Bestimmen eines Nahbereichs (N) um einen zentralen Raumpunkt (S) mit mindestens zwei Raumpunkten,

■ deren Winkelkoordinaten (θ, φ) in einem definierten Winkelraum benachbart zu denen des zentralen Raumpunktes (S) sind und
■ deren gemessene Distanzen (r) sich von der im zentralen Raumpunkt (S) gemessenen Distanz ($r_0$) um nicht mehr als einen definierten Schwellenwert (t) unterscheiden,

• Aggregieren von Koordinaten (r, θ, φ) der Raumpunkte im bestimmten Nahbereich (N), und
• Ersetzen von Koordinaten (r, θ, φ) des zentralen Raumpunkt (S) durch das Aggregieren von Koordinaten (r, θ, φ) der Raumpunkte im bestimmten Nahbereich (N)

ausführbar sind,
**dadurch gekennzeichnet, dass**

• der Laserscanner derart konfiguriert ist, dass die Raumpunkte in mindestens drei Bereichsegmenten (N',N'',N''',N'''',N''''') mit der Scannschrittgrösse eines ersten Winkels (θ) abgetastet werden; und
• die Auswertungseinheit (3) derart konfiguriert ist, dass unter Verwendung dieser Bereichsegmente (N',N'',N''') ein Nahbereich (N) bestimmt wird, bei dem mindestens solche Bereichsegmente (N',N'',N''',N'''',N''''') als zum zentralen Raumpunkt (S) benachbart gelten, die kleiner oder gleich zwei Scannschrittgrössen eines zweiten Winkels (φ) um den zentralen Raumpunkt (S) sind.

14. Computerprogrammprodukt mit Programmcode, der auf einem maschinenlesbaren Träger gespeichert ist, zur Ausführung der Schritte des Verfahrens nach einem der Ansprüche 5 bis 10.

**Claims**

1. A method for measuring spatial points by means of a laser scanner (1), having the steps

• scanning a plurality of spatial points of an object (2, 2'),
• ascertaining coordinates (r, Θ, φ) of the respective spatial point, wherein the laser scanner (1) forms the coordinate origin and the coordinates comprise a distance (r) and two angles (Θ, φ),
• defining a two-dimensional vicinity (N) around a central spatial point (S), having.

    ■ at least two spatial points, the first angle coordinate (Θ) of which in a defined angle space is adjacent to that of the central spatial point (S), and
    • at least two spatial points, the second angle coordinate (φ) of which in a defined angle space is adjacent to that of the central spatial point (S),

• aggregating coordinates (r, Θ, φ) of the spatial points in the defined vicinity (N), and
• replacing coordinates (r, Θ, φ) of the central spatial point (S) by the aggregation of coordinates (r, Θ, φ) of the spatial points in the defined vicinity (N),

**characterized in that**

• the spatial points are scanned by the laser scanner (1) in at least three region segments (N', N'', N''', N'''', N''''') having the scanning step size of a first angle (Θ); and
• while using these region segments (N', N'', N'''), a vicinity (N) is defined, wherein at least those region segments (N', N'', N''', N'''', N'''''), which are less than or equal to two scanning step sizes of a second angle (φ) around the central spatial point (S) are considered to be adjacent to the central spatial point (S).

2. The method as claimed in claim 1,
**characterized in that** the spatial points are scanned by the laser scanner (1) using a scanning step size of an angle (Θ, φ), in particular wherein while using these scanned spatial points, a vicinity (N) is defined, wherein at least those scanned spatial points, which are less than or equal to two scanning step sizes of the angle (Θ, φ) around the central spatial point (S), are considered to be adjacent to the central spatial point (S).

3. The method as claimed in claim 1 or claim 2, **characterized in that** the aggregation of coordinates (r, Θ, φ) in the defined vicinity (N) is weighted by a settable filter (Θ), wherein scanned spatial points, the measured distances (r) of which differ from the distance (r0) measured in the central spatial point (S) by more than a defined threshold value (t), are filtered out by an adapted filter (Θ), in particular wherein the spatial points in the vicinity (N) are equally weighted by the filter (Θ), or unequally, in particular are centrally and/or in a parabola weighted.

4. The method as claimed in any one of claims 1 to 3, **characterized in that** only coordinates (r, Θ, φ) of those spatial points are aggregated, the measured distances (r) of which differ from the distance ($r_0$) measured in the central spatial point (S) by not more than a defined threshold value (t), wherein a threshold value (t) is used, which has a sum of a constant displacement value ($t_0$) and a measured value ($t_1$), in particular wherein a measured value ($t_1$) is used, which

• is inversely proportional to a measured amplitude (A) of the registered light (15'),
• is proportional to a power of a measured amplitude (A) of the registered light (15') having a real exponent, and/or
• is derived from the signal-to-noise ratio (SNR) of the registered light (15').

5. A method for measuring spatial points by means of a laser scanner (1), having the steps

• scanning a plurality of spatial points of an object (2, 2'), and
• ascertaining coordinates (r, Θ, φ) of the respective spatial point, wherein the laser scanner (1) forms the coordinate origin and the coordinates comprise a distance (r) and at least one angle (Θ, φ),
• defining a vicinity (N) around a central spatial point (S), having at least two spatial points,

    ■ the angle coordinates (Θ, φ) of which in a defined angle space are adjacent to that of the central spatial point (S), and
    ■ the measured distances (r) of which differ from the distance ($r_0$) measured in the central spatial point (S) by not more than a defined threshold value (t),

• aggregating coordinates (r, Θ, φ) of the spatial points in the defined vicinity (N), and
• replacing coordinates (r, Θ, φ) of the central spatial point (S) by the aggregation of coordinates (r, Θ, φ) of the

spatial points in the defined vicinity (N),

**characterized in that**

- the spatial points are scanned by the laser scanner (1) in at least three region segments (N', N'', N''', N'''', N''''') having the scanning step size of a first angle (Θ); and
- while using these region segments (N', N'', N'''), a vicinity (N) is defined, wherein at least those region segments (N', N'', N''', N'''', N''''') which are less than or equal to two scanning step sizes of a second angle (φ) around the central spatial point (S) are considered to be adjacent to the central spatial point (S).

6.  The method as claimed in claim 5,
    **characterized in that** a threshold value (t) is used, which has a sum of a constant displacement value (to) and a measured value (t₁), in particular wherein a measured value (t₁) is used, which

    - is inversely proportional to a measured amplitude (A) of the registered light (15'),
    - is proportional to a power of a measured amplitude (A) of the registered light (15') having a real exponent, and/or
    - is derived from the signal-to-noise ratio (SNR) of the registered light (15').

7.  The method as claimed in claim 5 or claim 6, **characterized in that** the aggregation of coordinates (r, Θ, φ) in the defined vicinity (N) is weighted by a settable filter (Θ), in particular wherein the spatial points in the vicinity (N) are weighted by the filter (Θ)

    - equally, or
    - unequally, in particular centrally and/or in a parabola.

8.  The method as claimed in any one of claims 5 to 7, **characterized in that** a two-dimensional vicinity (N) around the central spatial point (S) is ascertained, in particular wherein the vicinity (N) has

    - at least two spatial points, the first angle coordinate (Θ) of which in a defined angle space is adjacent to that of the central spatial point (S), and
    - at least two spatial points, the second angle coordinate (φ) of which in a defined angle space is adjacent to that of the central spatial point (S).

9.  The method as claimed in any one of claims 1 to 8, **characterized in that**

    - the vicinity (N) is defined with the use of three spatial points scanned in chronological sequence by the laser scanner (1), wherein at least one scanned spatial point has been scanned chronologically before the central spatial point (S) and at least one scanned spatial point has been scanned chronologically after the central spatial point (S), and/or
    - a vicinity (N) which is symmetrical in the angle space is defined, in particular wherein a number of spatial points arranged symmetrically in relation to the central spatial point (S) is defined as the vicinity (N) in the angle space.

10. The method as claimed in any one of claims 1 to 8, **characterized in that**

    - respectively the distance (r) of the spatial points (N) is aggregated in the defined vicinity,
    - respectively three coordinates (r, Θ, φ) of the spatial points are aggregated in the defined vicinity (N), and/or
    - coordinates (r, Θ, φ) of the central spatial point (S) are replaced by a mean value (w) of coordinates (r, Θ, φ) in the defined vicinity (N), in particular wherein at least the distance (r) of the central spatial point (S) is replaced.

11. A system for carrying out the method as claimed in any one of claims 1 to 4, comprising a laser scanner (1), wherein the steps of

    - scanning a plurality of spatial points of an object (2, 2'), and
    - ascertaining coordinates (r, Θ, φ) for each of the spatial points, wherein the laser scanner (1) forms the coordinate origin and the coordinates comprise a distance (r) and at least two angles (Θ, φ),

    are executable by the laser scanner (1); and wherein the system comprises an analysis unit (3) configured such that at least the steps of:

• defining a two-dimensional vicinity (N) around a central spatial point (S), having

■ at least two spatial points, the first angle coordinate (Θ) of which in a defined angle space is adjacent to that of the central spatial point (S), and
■ at least two spatial points, the second angle coordinate (φ) of which in a defined angle space is adjacent to that of the central spatial point (S),

• aggregating coordinates (r, Θ, φ) of the spatial points in the defined vicinity (N), and
• replacing coordinates (r, Θ, φ) of the central spatial point (S) by the aggregation of coordinates (r, Θ, φ) of the spatial points in the defined vicinity (N)

are executable,
**characterized in that**

• the laser scanner is configured such that the spatial points are scanned in at least three region segments (N', N", N''', N"", N''''') having the scanning step size of a first angle (Θ); and
• the analysis unit (3) is configured such that while using these region segments (N', N", N'''), a vicinity (N) is defined, wherein at least those region segments (N', N", N''', N"", N'''''), which are less than or equal to two scanning step sizes of a second angle (φ) around the central spatial point (S) are considered to be adjacent to the central spatial point (S).

12. A computer program product having program code, which is stored on a machine-readable carrier, for executing the steps of the method as claimed in any one of claims 1 to 4.

13. A system for carrying out the method as claimed in any one of claims 5 to 10 comprising a laser scanner (1), wherein the steps of

• scanning a plurality of spatial points of an object (2, 2'), and
• ascertaining coordinates (r, Θ, φ) for each of the spatial points, wherein the laser scanner (1) forms the coordinate origin and the coordinates comprise a distance (r) and at least one angle (Θ, φ),

are executable by the laser scanner (1); and wherein
the system comprises an analysis unit (3), configured such that at least the steps of:

• defining a vicinity (N) around a central spatial point (S), having at least two spatial points,

■ the angle coordinates (Θ, φ) of which in a defined angle space are adjacent to that of the central spatial point (S), and
■ the measured distances (r) of which differ from the distance ($r_0$) measured in the central spatial point (S) by not more than a defined threshold value (t),

• aggregating coordinates (r, Θ, φ) of the spatial points in the defined vicinity (N), and
• replacing coordinates (r, Θ, φ) of the central spatial point (S) by the aggregation of coordinates (r, Θ, φ) of the spatial points in the defined vicinity (N)

are executable,
**characterized in that**

• the laser scanner is configured such that the spatial points are scanned in at least three region segments (N', N", N''', N"", N''''') having the scanning step size of a first angle (Θ) ; and
• the analysis unit (3) is configured such that while using these region segments (N', N", N'''), a vicinity (N) is defined, wherein at least those region segments (N', N", N''', N"", N'''''), which are less than or equal to two scanning step sizes of a second angle (φ) around the central spatial point (S) are considered to be adjacent to the central spatial point (S).

14. A computer program product having program code, which is stored on a machine-readable carrier, for executing the steps of the method as claimed in any one of claims 5 to 10.

**Revendications**

1. Procédé pour mesurer des points spatiaux au moyen d'un scanner laser (1), comprenant les étapes:

    • balayer une pluralité de points spatiaux d'un objet (2, 2'),
    • déterminer des coordonnées (r, θ, φ) du point spatial respectif, le scanner laser (1) formant l'origine des coordonnées et les coordonnées comprenant une distance (r) et deux angles (θ, φ),
    • déterminer une zone proche bidimensionnelle (N) autour d'un point spatial central (S), présentant

        ▪ au moins deux points spatiaux dont la première coordonnée angulaire (θ) est adjacente à celle du point spatial central (S) dans un espace angulaire défini, et
        ▪ au moins deux points spatiaux dont la deuxième coordonnée angulaire (φ) est adjacente à celle du point spatial central (S) dans un espace angulaire défini,

    • agréger des coordonnées (r, θ, φ) des points spatiaux dans la zone proche (N) déterminée, et
    • remplacer des coordonnées (r, θ, φ) du point spatial central (S) par l'agrégation de coordonnées (r, θ, φ) des points spatiaux dans la zone proche (N) déterminée,

    **caractérisé en ce que**

    • les points spatiaux sont balayés par le scanner laser (1) dans au moins trois segments de zone (N', N", N''', N'''', N''''') avec la taille de pas de scannage d'un premier angle (θ) ; et
    • une zone proche (N) est déterminée en utilisant ces segments de zone (N', N", N'''), au moins les segments de zone (N', N", N''', N'''', N''''') qui sont inférieurs ou égaux à deux tailles de pas de scannage d'un deuxième angle (φ) autour du point spatial central (S) étant considérés comme adjacents au point spatial central (S).

2. Procédé selon la revendication 1,
    **caractérisé en ce que** les points spatiaux sont balayés par le scanner laser (1) avec une taille de pas de scannage d'un angle (θ, φ), une zone proche (N) étant en particulier déterminée en utilisant ces points spatiaux balayés, au moins les points spatiaux balayés qui sont inférieurs ou égaux à deux tailles de pas de scannage de l'angle (θ, φ) autour du point spatial central (S) étant considérés comme étant adjacents au point spatial central (S).

3. Procédé selon la revendication 1 ou la revendication 2,
    **caractérisé en ce que** l'agrégation de coordonnées (r, θ, φ) dans la zone proche (N) déterminée est pondérée par un filtre réglable (Θ), des points spatiaux balayés dont les distances (r) mesurées diffèrent de la distance ($r_0$) mesurée au point central (S) de plus d'une valeur seuil définie (t) étant éliminés par un filtre adapté (Θ), en particulier les points spatiaux dans la zone proche (N) étant pondérés par le filtre (Θ) de manière égale ou inégale, en particulier de manière centrale et/ou parabolique.

4. Procédé selon l'une des revendications 1 à 3,
    **caractérisé en ce que** seules sont agrégées des coordonnées (r, θ, φ) des points spatiaux dont les distances (r) mesurées diffèrent de la distance ($r_0$) mesurée au point spatial central (S) d'au plus une valeur seuil définie (t), une valeur seuil (t) qui présente une somme d'une valeur de décalage constante ($t_0$) et d'une valeur de mesure ($t_1$) étant utilisée, dans laquelle somme on utilise en particulier une valeur de mesure ($t_1$) qui est

    • inversement proportionnelle à une amplitude mesurée (A) de la lumière détectée (15'),
    • proportionnelle à une puissance d'une amplitude mesurée (A) de la lumière détectée (15') avec un exposant réel, et/ou
    • dérivée du rapport signal sur bruit (RSB) de la lumière détectée (15').

5. Procédé de mesure de points spatiaux au moyen d'un scanner laser (1), comprenant les étapes:

    • balayer une pluralité de points spatiaux d'un objet (2, 2'),
    • déterminer des coordonnées (r, θ, φ) du point spatial respectif, le scanner laser (1) formant l'origine des coordonnées et les coordonnées comprenant une distance (r) et au moins un angle (θ, φ),

• déterminer une zone proche (N) autour d'un point spatial central (S) avec au moins deux points spatiaux,

- dont les coordonnées angulaires ($\theta$, $\varphi$) sont adjacentes à celles du point spatial central (S) dans un espace angulaire défini, et
- dont les distances mesurées (r) diffèrent de la distance ($r_0$) mesurée au point spatial central (S) d'au plus une valeur seuil définie (t),

• agréger des coordonnées (r, $\theta$, $\varphi$) des points spatiaux dans la zone proche (N) déterminée, et
• remplacer des coordonnées (r, $\theta$, $\varphi$) du point spatial central (S) par l'agrégation de coordonnées (r, $\theta$, $\varphi$) des points spatiaux dans la zone proche (N) déterminée,

**caractérisé en ce que**

• les points spatiaux sont balayés par le scanner laser (1) dans au moins trois segments de zone (N', N'', N''', N'''', N''''') avec la taille de pas de scannage d'un premier angle ($\theta$) ; et
• une zone proche (N) est déterminée en utilisant ces segments de zone (N', N'', N'''), au moins les segments de zone (N', N'', N''', N'''', N''''') qui sont inférieurs ou égaux à deux tailles de pas de scannage d'un deuxième angle ($\varphi$) autour du point spatial central (S) étant considérés comme adjacents au point spatial central (S).

**6.** Procédé selon la revendication 5,
**caractérisé en ce qu'**une valeur seuil (t) qui présente une somme d'une valeur de décalage constante ($t_0$) et d'une valeur de mesure ($t_1$) est utilisée, dans laquelle somme on utilise en particulier une valeur de mesure ($t_1$) qui est

• inversement proportionnelle à une amplitude mesurée (A) de la lumière détectée (15'),
• proportionnelle à une puissance d'une amplitude mesurée (A) de la lumière détectée (15') avec un exposant réel, et/ou
• dérivée du rapport signal sur bruit (RSB) de la lumière détectée (15').

**7.** Procédé selon la revendication 5 ou la revendication 6,
**caractérisé en ce que** l'agrégation de coordonnées (r, $\theta$, $\varphi$) dans la zone proche (N) déterminée est pondérée par un filtre réglable ($\Theta$), en particulier les points spatiaux dans la zone proche (N) étant pondérés

• de manière égale, ou
• de manière inégale, en particulier de manière centrale et/ou parabolique par le filtre ($\Theta$).

**8.** Procédé selon l'une des revendications 5 à 7,
**caractérisé en ce qu'**une zone proche bidimensionnelle (N) autour du point spatial central (S) est déterminée, en particulier la zone proche (N) présentant

• au moins deux points spatiaux dont la première coordonnée angulaire ($\theta$) est adjacente à celle du point spatial central (S) dans un espace angulaire défini, et
• au moins deux points spatiaux dont la deuxième coordonnée angulaire ($\varphi$) est adjacente à celle du point spatial central (S) dans un espace angulaire défini.

**9.** Procédé selon l'une des revendications précédentes,
**caractérisé en ce que**

• la zone proche (N) est déterminée en utilisant trois points spatiaux balayés par le scanner laser (1) dans un ordre chronologique, au moins un point spatial balayé ayant été balayé chronologiquement avant le point spatial central (S) et au moins un point spatial balayé ayant été balayé chronologiquement après le point spatial central (S), et/ou
• une zone proche (N) symétrique dans l'espace angulaire est déterminée, en particulier un certain nombre de points spatiaux disposés symétriquement par rapport au point spatial central (S) étant déterminés en tant que zone proche (N) dans l'espace angulaire.

**10.** Procédé selon l'une des revendications précédentes,
**caractérisé en ce que**

• la distance (r) des points spatiaux dans la zone proche (N) déterminée est chaque fois agrégée,

• trois coordonnées (r, θ, φ) des points spatiaux dans la zone proche (N) déterminée sont chaque fois agrégées, et/ou

• des coordonnées (r, θ, φ) du point spatial central (S) sont remplacées par une valeur moyenne (w) de coordonnées (r, θ, φ) dans la zone proche (N) déterminée, en particulier au moins la distance (r) du point central (S) étant remplacée.

**11.** Système pour mettre en oeuvre le procédé selon l'une des revendications 1 à 4, comprenant un scanner laser (1), lequel scanner laser (1) peut exécuter les étapes comprenant à:

• balayer une pluralité de points spatiaux d'un objet (2, 2'), et

• déterminer des coordonnées (r, θ, φ) pour chacun des points spatiaux, le scanner laser (1) formant l'origine des coordonnées et les coordonnées comprenant une distance (r) et au moins deux angles (θ, φ) ;

et lequel le système comprend une unité d'évaluation (3) qui est configurée de sorte à pouvoir exécuter au moins les étapes comprenant à

• déterminer une zone proche bidimensionnelle (N) autour d'un point spatial central (S), présentant

■ au moins deux points spatiaux dont la première coordonnée angulaire (θ) est adjacente à celle du point spatial central (S) dans un espace angulaire défini, et

■ au moins deux points spatiaux dont la deuxième coordonnée angulaire (φ) est adjacente à celle du point spatial central (S) dans un espace angulaire défini,

• agréger des coordonnées (r, θ, φ) des points spatiaux dans la zone proche (N) déterminée, et

• remplacer des coordonnées (r, θ, φ) du point spatial central (S) par l'agrégation de coordonnées (r, θ, φ) des points spatiaux dans la zone proche (N) déterminée,

**caractérisé en ce que**

• le scanner laser est configuré de telle sorte que les points spatiaux sont balayés dans au moins trois segments de zone (N', N'', N''', N'''', N''''') avec la taille de pas de scannage d'un premier angle (θ, φ) ; et

• l'unité d'évaluation (3) est configurée de telle sorte qu'une zone proche (N) est déterminée en utilisant ces segments de zone (N', N'', N'''), au moins les segments de zone (N', N'', N''', N'''', N''''') qui sont inférieurs ou égaux à deux tailles de pas de scannage d'un deuxième angle (φ) autour du point spatial central (S) étant considérés comme adjacents au point spatial central (S).

**12.** Produit programme d'ordinateur avec un code de programme qui est stocké sur un support lisible par machine pour exécuter les étapes du procédé selon l'une des revendications 1 à 4.

**13.** Système pour mettre en oeuvre le procédé selon l'une des revendications 5 à 10, comprenant un scanner laser (1), lequel scanner laser (1) pouvant exécuter les étapes comprenant à

• balayer une pluralité de points spatiaux d'un objet (2, 2'), et

• déterminer des coordonnées (r, θ, φ) pour chacun des points spatiaux, le scanner laser (1) formant l'origine des coordonnées et les coordonnées comprenant une distance (r) et au moins un angle (θ, φ) ;

et lequel système comprend une unité d'évaluation (3) qui est configurée de sorte à pouvoir exécuter au moins les étapes comprenant à

• déterminer une zone proche (N) autour d'un point spatial central (S), avec au moins deux points spatiaux

• dont les coordonnées angulaires (θ, φ) sont adjacentes à celle du point spatial central (S) dans un espace angulaire défini, et

• dont les distances (r) mesurées diffèrent de la distance ($r_0$) mesurée au point spatial central (S) d'au plus une valeur seuil définie (t),

• agréger des coordonnées (r, θ, φ) des points spatiaux dans la zone proche (N) déterminée, et

• remplacer des coordonnées (r, θ, φ) du point spatial central (S) par l'agrégation de coordonnées (r, θ, φ) des points spatiaux dans la zone proche (N) déterminée,

**caractérisé en ce que**

• le scanner laser est configuré de telle sorte que les points spatiaux sont balayés dans au moins trois segments de zone (N', N", N'", N"", N""') avec la taille de pas de scannage d'un premier angle (θ) ; et
• l'unité d'évaluation (3) est configurée de telle sorte qu'une zone proche (N) est déterminée en utilisant ces segments de zone (N', N", N'"), au moins les segments de zone (N', N", N'", N"", N""') qui sont inférieurs ou égaux à deux tailles de pas de scannage d'un deuxième angle (φ) autour du point spatial central (S) étant considérés comme adjacents au point spatial central (S).

14. Produit programme d'ordinateur avec un code de programme qui est stocké sur un support lisible par machine pour exécuter les étapes du procédé selon l'une des revendications 5 à 10.

EP 2 786 174 B1

Fig. 1

Fig. 2

22

Fig. 3

Fig. 4

Fig. 5

Fig. 6

*Fig.* 7

*Fig.* 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10150436 A1
- US 5644386 A
- DE 102010020925 A1